# EUROPEAN PATENT SPECIFICATION

(11) **EP 2 727 839 B1**
(45) Date of publication and mention of the grant of the patent: **28.08.2019**
(21) Application number: 13185961.3
(22) Date of filing: 25.09.2013
(51) Int. Cl.: B64D 41/00

(54) **Method of Controlling an Aircraft Electrical Power Generation System**
Verfahren zur Steuerung eines Flugzeugstromerzeugungssystems
Procédé de commande d'un système de génération d'énergie électrique d'un aéronef

(30) Priority: 06.11.2012 GB 201219922
(43) Date of publication of application: 07.05.2014
(73) Proprietor: Rolls-Royce plc, London SW1E 6AT (GB)
(72) Inventor: Edwards, Huw Llewelyn, Derby, DE3 0PY (GB); Vyas, Parag, Nottingham, NG2 5HG (GB); Hillel, Malcolm, Derby, Derbyshire DE72 2AJ (GB); Gardner, Alasdair, Derby, DE1 3EH (GB); Ellis, Sean Patrick, Derby, DE21 2UQ (GB); Howarth, Nicholas, Derby, DE23 6FY (GB)
(74) Representative: Rolls-Royce plc

(56) References cited:
- EP-A2- 2 099 111
- EP-A2- 2 164 148
- WO-A1-2006/023981
- US-A1- 2008 179 947
- US-A1- 2012 221 157

## Description

### Field of the Invention

The present invention relates to a method of controlling an electrical power generation system for an aircraft, and an electrical power generation system for an aircraft.

### Background to the Invention

Aircraft such as modern large commercial airliners require relatively large amounts of electrical power in order to run subsystems such as actuators for aerodynamic control surfaces, avionics and cabin pressurisation. Electrical power requirements for both civil and military aircraft are continually increasing with each successive generation of aircraft. Aircraft having relatively large electrical power requirements relative to hydraulic and pneumatic power requirements are known in the art as "More Electric Aircraft" (MEA). For example, a twin engine 300 seat MEA aircraft may have a peak power requirement of approximately 1,000 kW. During normal operation in flight, this power is provided by the main engines, which are generally capable of providing 500kW per engine.

To backup the main engine power offtake in the case of engine failure, or where the aircraft is on the ground, there is often provided one or more auxiliary power units (APU). Typically the APU comprises a small gas turbine located in the tail cone of the aircraft. Several APUs of different types may be provided for different circumstances. For example, the APU may alternatively or in addition comprise any of a ram air turbine (RAT), fuel cell, piston engines and chemical batteries. For the above example MEA aircraft, the APU will have an electrical capacity of approximately 500kW of electrical power.

Control systems that initiate power transfer from the main engines to the APU following a main engine generator malfunction are known. Such a system is described by WO 2006023981. Other control systems include load management which can shed aircraft electrical loads when insufficient electrical power is available from either the APU or main generator. Such a system is described in US 2010/0204848. In some cases, the APU may be started in flight where the main engines are incapable of providing sufficient power for all essential electrical loads, such as at low throttle settings. Such a system is described in US 2011/033545.

However, given the increasing electrical requirements of MEA aircraft and increasing fuel costs, there is a need for more efficient use of main engine and APU power to provide both thrust and electrical power in order to reduce the costs associated with operating the aircraft. As well as fuel costs, maintenance requirements are also a major factor in the cost associated with the operation of an aircraft. One way to reduce maintenance requirements is to increase the life expectancy of the main engines. It is also therefore desirable to increase the life expectancy of the engines or engine components in order to reduce maintenance costs. It is also desirable to minimise the number of cycles of the APU (i.e. the number of times the APU is started and shutdown) in order to minimise APU maintenance costs. The operation of aircraft may also be restricted by noise pollution caused by the aircraft. It is also therefore desirable to reduce the noise generated by aircraft, particularly during takeoff and landing. Such problems may occur in both MEA and traditional bleed air aircraft.

EP2099111 discloses a power generation and distribution system utilising two or more AC generators, each of which may be driven by a separate prime mover such as a turbine. The generators may be driven at different rotational speeds. AC power from the generators may be rectified and applied to a common DC bus. Electrical loads may be applied to the common bus and may establish an electrical power requirement. Allocation of electrical power requirement may be made among the generators based on power available from the turbines.

The present invention seeks to address some or all of the above problems.

### Summary of the Invention

According to a first aspect of the present invention there is provided a method of operating an electrical generation system on an aircraft the electrical generation system comprising a main ducted fan gas turbine engine configured to drive a first electric generator as a first power source, and an auxiliary gas turbine engine (53) configured to drive a second electric generator as a second power source, the method comprising:
assessing a required electrical power of the aircraft;
assessing whether the first and the second electrical power source are able to provide the required electrical power in combination;
assessing main ducted fan engine operating parameters required to provide the electrical power in a first operating mode comprising utilising only the first electrical power source;
assessing main ducted fan engine operating parameters required to provide the electrical power in a second operating mode comprising utilising the first and second electrical power source in combination;
determining a fuel flow of the main ducted fan gas turbine engine when operated at the determined operating parameters for the first operating mode;
   determining a fuel flow of the main ducted fan gas turbine engine and auxiliary gas turbine engine in combination when operated in the second operating mode
determining the operating mode of the first and second electrical power sources operating modes having the lowest fuel flow; and operating the first and second electrical power sources according to the determined operating mode.

The method may further comprise detecting a predetermined flight cycle mode. The flight cycle mode may comprise one or more of a takeoff, ascent, cruise, descent and landing mode. The method may comprise operating the generation system according to a predetermined one of the first and second operating methods when the electrical generation system is in the predetermined flight cycle mode. For example, the generation system may be operating according to the first operating mode when the aircraft is in the cruise mode, and in the second operating mode when the aircraft is in any of the takeoff, ascent, descent and landing modes. The flight cycle mode may be determined by a measured or inferred main engine spool speed, and may be determined by a predetermined time within a predetermined engine spool speed range.

It has been found that the life of components of the main engine (in particular the turbine blades) can be increased by operating the APU during certain phases of the flight cycle where the main engine is heavily loaded, or where the main engine can expect to experience large, sudden throttle changes, such as during takeoff and ascent. Consequently, the invention reduces aircraft operating costs by increasing the life of main engine components. It has also been found that the noise produced by the main engines can be reduced by using the APU during the descent and landing phases, where noise is a significant issue. This is because use of the APU may allow the main engine bleed valves to be closed during the landing and descent phases. The bleed valves have been found to contribute to a significant proportion of engine noise when the engines are at low thrust. The bleed valves are also known to increase fuel flow when open, thereby leading to reduced thermal efficiency.

The method may further comprise detecting an override condition. The override condition may comprise one or more of a main engine inlet ice detection condition, a main inlet water ingestion condition, a ground idle condition and an off-nominal main engine condition, such as a shaft failure condition. Where the power source failure detection condition is met, the required power may be provided according to the first operating mode.

It has been found that in some conditions, such as extreme icing, the handling bleeds may have to remain in the open position, irrespective of the load on the main engine. In such circumstances, there would be no efficiency benefit in operating the APU. The method of operation therefore comprises an override condition which prevents the APU from operating where an override condition is met.

It has been surprisingly found that in some circumstances, operating the first power source in combination with the second power source can provide an aircraft required electrical power with greater efficiency, i.e. with a predetermined, relatively lower fuel flow compared to operating only the main engine to provide the electrical power requirement. Consequently, the invention can be used to determine the most efficient method of generating the electrical power requirement, and generate the electrical power using the most efficient method.

The step of determining the operating mode may comprise determining the main engine operating parameters required to provide the required electrical power using the main engine and the auxiliary engine, and determining the fuel flow of the main engine at the determined engine operating parameters. Alternatively, the step of determining the operating mode may comprise determining the main engine operating parameters required to provide the required electrical power using the main engine and the auxiliary engine, and determining the electrical generation efficiency at the determined engine operating parameters. The electrical generation efficiency is a measure of the amount of electrical power produced per unit of fuel flow. Such a determination may be more accurate compared to determining the operating mode according to the fuel flow, since determining the electrical generation efficiency will include any mechanical transmission or electrical generator losses.

The engine operating parameters may comprise any of measured or inferred throttle setting, one or more shaft rotational speeds, turbine entry temperature (TET), turbine gas temperature (TGT) overall pressure ratio (OPR), compressor entry pressure (P20) or compressor exit pressure (P30), aircraft Mach number, altitude, throttle position, ambient temperature and the enthalpy of one or more main engine turbine exit flows. Where the main engine comprises a three shaft engine, the enthalpy of the turbine exit flow may comprise the intermediate pressure turbine exit flow, and where the main engine comprises a two shaft engine, the enthalpy of the turbine exit flow may comprise the low pressure turbine exit flow.

The overall fuel flow of the second operating method may be determined by determining the second power source operating parameters required to generate the electrical power requirement, and determining the fuel flow of the second power source at the second power source operating parameters.

It has been found that by using both the first and second power sources to generate the required electrical power, the fuel flow of the first power source may be significantly reduced compared to when the first power source alone is used to generate the required electrical power. For example, where the first power source comprises a main gas turbine engine, handing bleeds of the main engine may be closed due to the changed operating parameters. The main engine is also required to provide thrust in addition to providing the required electrical power to the aircraft. The thrust requirements generally account for approximately 90% to 99% of the engine power, with the electrical requirements accounting for approximately 1% to 10 % of the engine power, depending on the aircraft, and the flight mode of the aircraft, with electrical power generally being a smaller proportion of the engine power at high thrust. Consequently, the increase in efficiency of the first power source may result in an overall increase in efficiency of the power generation system as a whole. This is the case even where the second power source has a lower efficiency at the determined operating parameters than the main engine, since the second power source accounts for a smaller proportion of overall fuel flow. Therefore by determining the change in efficiency of the first power source, the most efficient operating method can be determined in most circumstances.

The predetermined electrical generation system condition at the first or second power source operating parameters may be determined using a lookup table or a model.

The main engine may comprise a plurality of gas turbine engines. Each gas turbine engine may comprise a two shaft gas turbine engine comprising high pressure and low pressure shafts. Alternatively, each gas turbine engine may comprise a three shaft gas turbine engine comprising high pressure, intermediate pressure and low pressure shafts. Where the main engine comprises a three shaft gas turbine engine, the main generator may be driven by one or more of the high, intermediate and low pressure shafts. Where the main engine comprises a two shaft gas turbine engine, the main generator may be driven by one or more of the high and low pressure shafts.

Preferably, where the main engine comprises a three shaft gas turbine engine, the main generator is driven by one of the intermediate and high pressure compressor shafts, and where the main engine comprises a two shaft gas turbine, the main generator is driven by the high pressure shaft. The intermediate and high pressure shafts have been found to be capable of providing sufficient power for supplying all required aircraft electrical power at substantially any power setting without the need for additional electrical power from the auxiliary power source. Consequently, on failure of the APU, electrical power can be maintained by the main generator. The invention therefore provides a method of operating an aircraft electrical power generation system which is both more fuel efficient than previous methods, and has a greater degree of redundancy, and therefore safety in operation, since the auxiliary power source does not have to be relied upon to provide electrical power when the main engine is operational.

According to a second aspect of the present invention there is provided an aircraft comprising an electrical power generation system for an aircraft, the power generation system comprising a main ducted fan gas turbine engine configured to drive a first electric generator as a first power source and an auxiliary gas turbine engine configured to drive a second electric generator as a second power sources and a controller configured to:
assess a required electrical power of the aircraft;
assess whether the first and second electrical power source are able to provide the required power in combination;
assess main ducted fan engine operating parameters required to provide the electrical power in a first operating mode comprising utilising only the first electrical power source;
   assess main ducted fan engine operating parameters required to provide the electrical power in a second operating mode comprising utilising the first and second electrical power source in combination;
determine a fuel flow of the main ducted fan gas turbine engine when operated at the determined operating parameters for the first operating mode;
determine a fuel flow of the main ducted fan gas turbine engine and auxiliary gas turbine engine in combination when operated in the second operating mode;
determine the operating mode of the first and second electrical power sources operating modes having the lowest fuel flow; and operate the first and second electrical power sources according to the determined operating mode.

### Brief Description of the Drawings

Figure 1 shows a conventional multi spool gas turbine engine;
Figure 2 shows a schematic representation of an electrical power generation system for an aircraft;
Figure 3 shows a control diagram of part of a control method for controlling the aircraft electrical power generation system of Figure 2 comprising a first method of determining overall aircraft fuel flow;
Figure 4 shows a control diagram of part of a control method for controlling the aircraft electrical power generation system of Figure 2 comprising a second method of determining overall aircraft fuel flow;
Figure 5 shows a control diagram of a first control method controlling the aircraft electrical power generation system of Figure 2 comprising the methods of figures 3 or 4;
Figure 6 shows a control diagram of a second control method controlling the aircraft electrical power generation system of Figure 2 comprising the methods of figures 3 or 4;
Figure 7 shows a control diagram of a third control method controlling the aircraft electrical power generation system of Figure 2 comprising the methods of figures 3 or 4; and
Figure 8 shows an aircraft having the electrical power generation system of Figure 2.

### Detailed Description

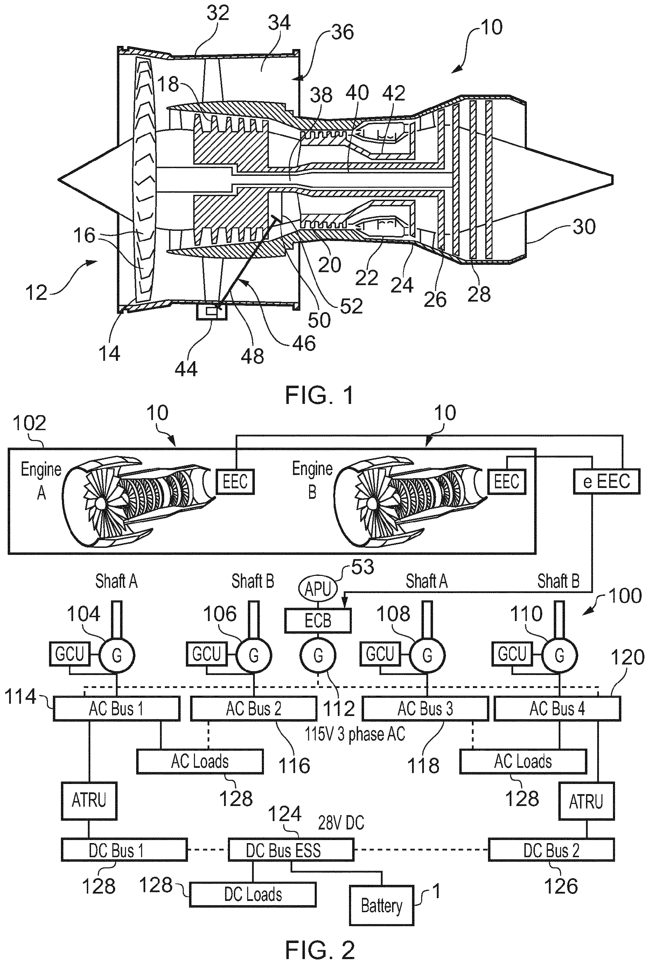

Figure 1 shows a conventional ducted fan gas turbine engine 10 comprising, in axial flow series: an air intake 12, a propulsive fan 14 having a plurality of fan blades 16, an intermediate pressure compressor 18, a high-pressure compressor 20, a combustor 22, a high-pressure turbine 24, an intermediate pressure turbine 26, a low-pressure turbine 28 and a core exhaust nozzle 30. A nacelle 32 generally surrounds the engine 10 and defines the intake 12, a bypass duct 34 and a bypass exhaust nozzle 36.

Air entering the intake 12 is accelerated by the fan 14 to produce a bypass flow and a core flow. The bypass flow travels down the bypass duct 34 and exits the bypass exhaust nozzle 36 to provide the majority of the propulsive thrust produced by the engine 10. The core flow enters the intermediate pressure compressor 18, high pressure compressor 20 and the combustor 22, where fuel is added to the compressed air and the mixture burnt. The hot combustion products expand through and drive the high, intermediate and low-pressure turbines 24, 26, 28 before being exhausted through the nozzle 30 to provide additional propulsive thrust. The high, intermediate and low-pressure turbines 24, 26, 28 respectively drive the high and intermediate pressure compressors 20, 18 and the fan 14 by interconnecting shafts 38, 40, 42.

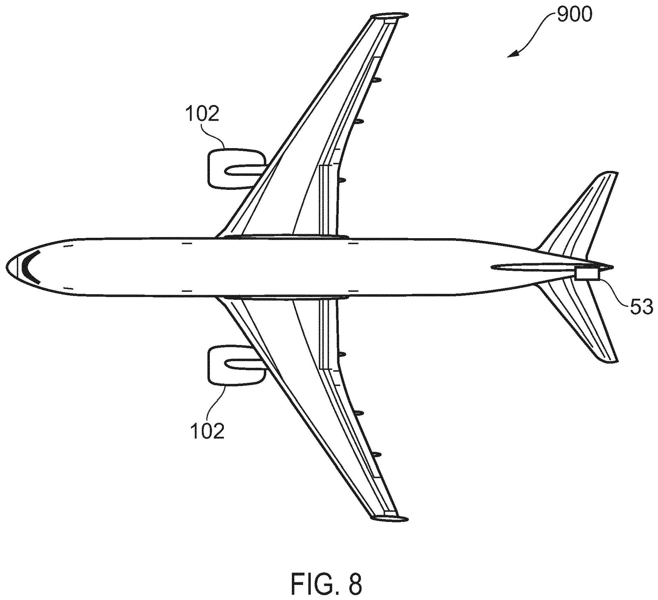

Figure 2 shows a schematic representation of an electrical power generation system 100 for an aircraft 900, shown schematically in Figure 8. The electrical power generation system 100 comprise a first power source comprising a main engine in the form of a pair of multi spool gas turbines 10, and a second power source in the form of an Auxiliary Power Unit (APU) 53 comprising one or more further gas turbine engines 53. The electrical power generation system 100 includes five electrical generators 104, 106, 108, 110, 112 which are driven by power take-offs 46 from the gas turbine engines 10, 53. Each power -off-take 46 includes an angle drive shaft 48, a step aside gearbox 50 and a radial drive 52. The radial drive 52 is coupled to the intermediate pressure spool shaft 40 via a geared arrangement for the main engine driven generators 106, 108, 110, and. In some circumstances, the generators could be coupled to a respective shaft within the engine core, for example by installing the generators between the fan 16 and intermediate compressor 18, or aft of the low pressure turbine 28 within the exhaust nozzle 30.

Thus, due to the choice of generator 44 and transmission 46, the rotational speed of the generator's rotor and the electrical frequency which is outputted into the electrical system of the aircraft 900 is proportional to the speed of the engine 10 where there is a direct connection between the shaft and respective generator. In some cases however, a continuous variable transmission may be used to ensure that the electrical frequency of the generator is substantially independent of the rotational speed of the respective shaft.

Typically, each main engine 10 drives two generators 104, 106, 108, 110. Both generators of each main engine 10 are typically driven by the same spool. In the described embodiment, each generator is driven by the intermediate spool 18 of each engine 10.

The fifth generator 112 is driven by a prime mover in the form of the APU 53. In some cases, the APU 53 may comprise two generators. The APU 53 is typically a small gas turbine but may be other forms of energy source such as a reciprocating engine, fuel cell or chemical battery for example.

The main engine generators 104 - 110 are connected to respective bus systems 114 - 126 which feed various aircraft 900 electrical loads 128 which are electrically isolated from one another during normal use. The electrical isolation avoids the problem of electrical synchronisation of the generator outputs which are driven at different speeds due to the different speeds of the shafts 38, 40 and therefore output different electrical frequencies. The electrical buses 114 - 126 are in the form of alternating current, AC, buses and direct current, DC, buses which are fed by some form of rectifier, which, in the described embodiment, is an auto transformer rectifying unit. The voltages of the buses 114 - 124 is generally determined by the demands of the equipment it supplies but would typically be a one to a few hundred volts AC or DC. Typically, aircraft DC systems supply either 28 or 270 Volts DC, and 115 or 230 Volts AC. A second auxiliary power source is also connected to the DC network in the form of battery 130.

To control the arrangement, the power generation system is provided with a controller comprising an extended Electronic Engine Control (eEEC) unit which is configured to control the main engine 102 including LP, IP and HP spools of each gas turbine 10, as well as the prime mover of the APU 53.

In general, the power generation system 100 is controlled according to the following control method. The required electrical power of the aircraft 900 and the capability of each of the first 102 and second 53 power sources to provide the required power is assessed. The ability of the first 102 and second 53 power sources to provide the required electrical power in combination is then assessed. A predetermined condition is then assessed. An operating mode of the first and second electrical power sources 102, 53 which matches the predetermined condition is then determined. The required electrical power is then provided from the first and second power sources 102, 53 according to the determined operating mode.

The predetermined electrical system condition could comprise one or more of optimal turbine entry temperature (TET), optimal (i.e. minimum fuel flow), or minimum noise.

There are described two operating modes. In the first operating mode, the electrical power requirement of the aircraft 900 is supplied using only the main engine 102. In the second operating mode, the main engine 102 and the APU 53 are operated in combination to provide the electrical power requirement.

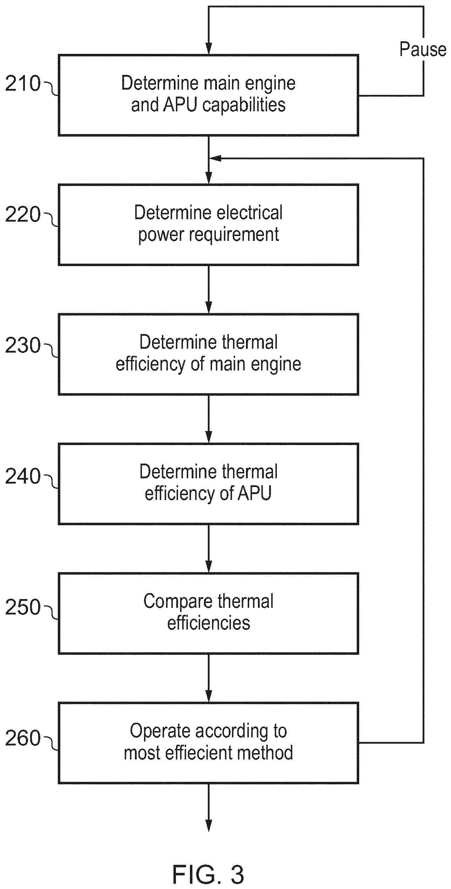

Figure 3 shows a control diagram of a first control method for controlling the aircraft electrical power generation system 100, starting with the main engine 102 in operation and the APU 53 shutdown. In this embodiment, the predetermined electrical generation system condition comprises overall fuel flow of the aircraft 900. Overall fuel flow of the aircraft 900 comprises the total fuel flow of the main engine 102 and the APU 53.

The electrical power generation requirement of the aircraft 900 is determined in a first step 210. This could be determined by measuring the instantaneous electrical power output of the engine electrical generators 104, 106, 108, 110 112 at the first step 210. This in turn is determined by a measurement of the volt and current output of each of the generators. Alternatively, the electrical power requirement could be estimated from engine performance data.

In a second step 220, the ability of the main engine 102 and APU 53 to provide the required power in combination is assessed. This may involve taking various measurements of main engine 102 and APU 53 operating parameters and comparing these to a lookup table which shows the ability of each of the main engine 102 and the APU 53 to provide the power for the given operating parameters. For example, the capability of the APU 53 is dependent on ambient temperature and altitude. In general, the capability of the APU 53 decreases with increasing altitude, and decreases with increasing temperature, in each case due to the reduction in density of the ambient air. If the main engine 102 and APU 53 are unable to provide the required power in combination (e.g. because the APU 53 is unable to provide the electrical power requirement due to the attitude of the aircraft 900), the APU 53 is not operated, and the main engine 102 continues to provide the required electrical power. After a delay, the capability of the main engine 102 and APU 53 to provide the electrical power in combination is reassessed.

If the main engine 102 and the APU 53 are capable of providing the electrical power in combination, the method progresses to a third step 230. In the third step 230, the fuel flow required to provide the electrical power requirement using the first operating mode is determined by determining the thermal efficiency of the main engine 102 at the main engine operating parameters required to provide the electrical power requirement. In some cases, the electrical power generating efficiency may instead be measured. In either case, these main engine operating parameters could for example measured or inferred current values of turbine entry temperature (TET), which could in turn be derived from measured turbine gas temperature (TGT). Alternatively, the main engine 102 operating parameters could comprise measured or inferred current values of calculated enthalpy of the intermediate pressure 26 exit flow where the main engine 102 comprises one or more three shaft gas turbine engines 10 (such as those shown in Figure 1), or the calculated enthalpy of the low pressure turbine exit flow where the main engine 102 comprises one or more two shaft gas turbine engines. The main engine 102 thermal efficiency could be determined from the main engine 102 operating parameters by a model or look up table. The data contained in the lookup table could be fixed. Alternatively, the data could be updated by a "data entry plug", i.e. a storage medium. In a still further alternative, the data could be updated by a wireless link or via an aircraft data network. Such updates could reflect altered relationships between engine parameters and efficiencies due to age of the engine for example.

In a fourth step 240, the fuel flow for providing the electrical power requirement using the second power operating mode is determined by determining the thermal efficiency of the APU 53 at the APU operating parameters required to provide the electrical power requirement. Again, this could be determined in a similar manner to the determination of the main engine 102 thermal efficiency. Alternatively, the thermal efficiency of the APU 53 could be a known constant determined from engine tests.

In a fifth step 250, the thermal efficiencies of the main engine 102 and APU 53 are compared. Accordingly, if the APU has a higher thermal efficiency at the operating parameters required to provide the electrical power requirement in the second operating mode, the second operating mode will be more efficient than the first operating mode. On the other hand, if the APU has a lower thermal efficiency at the operating parameters required to provide the electrical power requirement, the second operating mode may be less efficient than the first operating mode.

Accordingly, in a fifth step 250, the eEEC operates the power generation system 10 according to the most efficient operating mode as determined in the fourth step 240 (i.e. the mode that has the highest thermal efficiency, and hence the lowest fuel flow). If the most efficient operating mode comprises the first operating mode, the eEEC will go back to step 220. However, if the most efficient mode comprises the second mode, the eEEC will start the APU 53, and operate the APU generator 112 to provide the electrical power.

However, in some cases, the second mode may be more efficient than the first mode, even where the thermal efficiency of the APU 53 is lower than that of the main engine 102 at the respective operating parameters required to provide the electrical power requirement. This is because handing bleeds of the main engine 102 may be open at the engine operating parameters required to provide the required electrical power using the first operating method. This may be the case for example where the engine is at relatively low thrust levels. In general, the handling bleeds are opened whenever the engine eEEC detects that the engine 10 is operating close to the surge margin. Therefore one suitable engine parameter for assessing the thermal efficiency of the main engine 102 may comprise main one or more main engine shaft speeds. The main engine 102 will generally be significantly less efficient when the handling bleeds are open. By operating the power generation system according to the second operating mode, it may be possible to close the handing bleeds of the main engine 102. The main engine 102 is required to provide thrust in addition to providing the required electrical power to the aircraft. The thrust requirements generally account for approximately 90% to 99% of the engine power, with the electrical requirements accounting for approximately 1% to 10% of the engine power. Consequently, an increase in efficiency of the main engine by operating the power generation system 100 according to the second operating mode may result in an overall increase in efficiency of the power generation system 100 as a whole. This is the case even where the APU 53 has a lower efficiency at the determined operating parameters than the main engine 102.

Accordingly, a second control method for controlling the aircraft electrical power generation system 100 which takes into account this discovery is described.

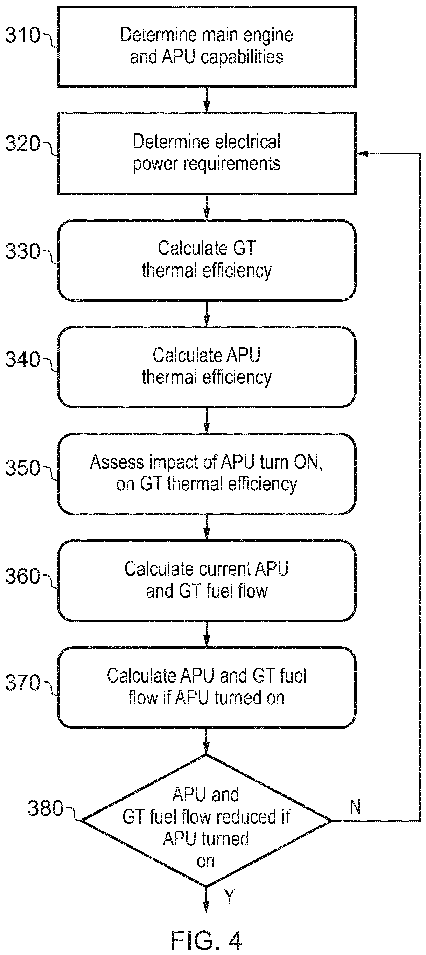

Figure 4 shows a control diagram of the second control method. Again, the predetermined electrical generation system condition comprises overall fuel flow of the aircraft, and the power generation system can be operated in either of the first or second operating modes.

In a similar manner to the first control method, the main engine 102 and APU 53 capabilities are determined in a first step 310, and the electrical power generation requirement of the aircraft is determined in a second step, 320. Alternatively, these steps could be reversed, such that the electrical power requirement of the aircraft could be determined prior to the determination of the main engine 102 and APU 53 capabilities.

In a third step 330, the overall fuel flow for the aircraft for providing the electrical power requirement using the first operating mode is determined by determining the thermal efficiency of the main engine 102 at main engine operating parameters required to provide the electrical power requirement in a similar manner to the third step 230 of the first control method.

In a fourth step 340, the APU thermal efficiency is determined, again in a similar manner to the fourth step 240 of the first control method.

However, the second control method differs from the first control method, in that in a fifth step 350, the overall fuel flow of the aircraft for the second operating method is determined by determining the main engine 102 operating parameters required to provide the required electrical power using the main engine 102 and the APU 53 in combination, and determining the thermal efficiency of the main engine 102 at the determined engine operating parameters. Since the load on the main engine 102 will generally be reduced when the power generation system 100 is operated according to the second operating method, the handling bleeds for example (if open) may be closed by the EEC, thereby resulting in an increased efficiency of the main engine 102, and consequently, a reduced overall fuel flow.

In a sixth step 360, the overall fuel flow of the power generation system 100 when operated in the first mode is determined by calculating the predicted fuel flow from the main engine efficiency calculation from step 330.

In a seventh step 370, the overall fuel flow of the power generation system 100 when operated in the second mode is determined by calculating the predicted fuel flow from the main engine 102 from the main engine 102 efficiency calculation from step 350, and calculating the fuel flow from the APU 53 from the APU 53 efficiency calculation from step 340.

In an eighth step 380, the most efficient operating mode is selected by comparing the respective fuel flows of the first and second operating modes determined in the sixth step 360 and the seventh step 370, and selecting the operating mode having the lowest overall fuel flow. The power generation system 100 is then operated according to the most efficient operating mode determined in the eighth step 380.

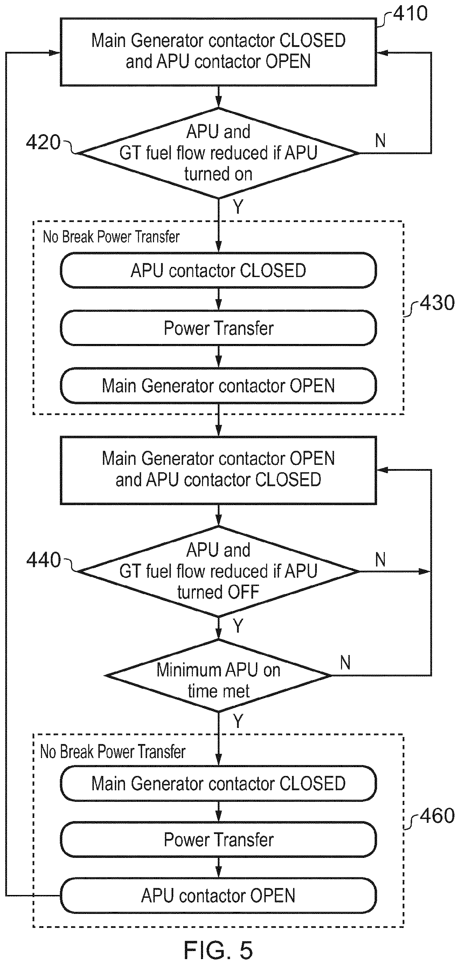

The control method shown in figures 3 and 4 are part of a larger control method, as shown in figure 5.

In order to switch between the first and second operating modes, a "no break" power transfer (NBPT) method may be used. Figure 5 shows an example NBPT method that incorporates the control method shown in figures 3 and 4.

At a first step 410, the power generation system 100 is operated according to the first operating mode, with only the main engine 102 running.

In the first step, 410, a main generator contactor is in the closed position, and so the main generators 104 - 110 are in electrical communication with the aircraft electrical buses 114 - 126. If the control method determines that the second operating mode is more efficient than the first operating mode (as shown in step 420 which incorporates the steps 210 to 260 of figure 3, or the steps 310 to 380 of figure 4), an NBPT is performed to switch the power generation system 100 to the second operating mode.

The NBPT operates by first controlling the frequency of the APU generator 112 so that it is close to the frequency of the main engine generators 104 - 110, typically through controlling the operating speed of the APU 53. Alternatives methods of controlling the frequency of the APU generator 112 include using power electronics for frequency correction. Once the frequency of the APU generator 112 matches that of the main engine generators 104 - 100 to within a predetermined limit, an APU contactor is then closed such that the APU generator 112 is in transitory electrical communication with the aircraft electrical buses 114 - 126 in a third step 430. The main generator contactor is then opened, and so the main generators 104 - 110 are no longer in electrical communication with the aircraft electrical buses 114 - 126. Consequently, the power transfer is made from the main engine 102 to the APU 53 without any break in electrical power provision to the aircraft electrical buses114 - 126. The power generation system is now operating in accordance with the second operating mode.

Similarly, the if the control method subsequently determines that the first operating mode is more efficient than the first operating mode (as shown in step 440), then a NBPT is performed to switch the power generation system 100 back to the first operating mode (step 460). However, a time delay (step 450) is introduced to prevent excessive cycling of the APU 53. Generally, once the method reaches step 460, and the APU 53 has been shutdown, the APU 53 is not then restarted until the next flight cycle. This is because the life expectancy of the APU 53 has been found to be dependent at least in part on the number of startup and shutdown cycles of the APU 53. The APU 53 may therefore be operated only once during each flight cycle. Alternatively, the APU 53 may be operated twice per flight cycle - once during take off and climb, and once during descent and landing. In any event, the APU 53 is generally operated three or fewer times per flight cycle.

In the above example, when both the main engine 102 and the APU 53 are operated in combination to provide the electrical power requirement, only the APU 53 is in electrical communication with the aircraft electrical buses 114 - 126. Such an operating method will be suitable where the APU 53 is found to be capable of providing the entire electrical power requirement without the assistance of the main engine 102 in step 210 or step 310. However, in some circumstances, such as at high altitude or high ambient temperature, the APU 53 may not be capable of producing sufficient power to supply the required aircraft electrical power.

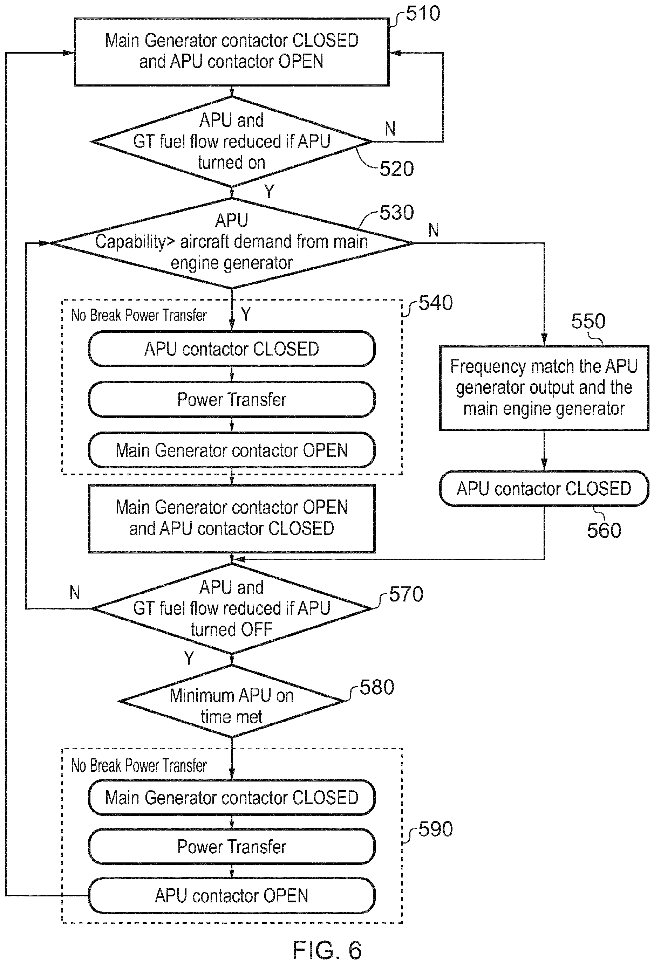

Figure 6 shows a control method suitable in circumstances where the APU 53 is not capable of producing sufficient power to supply the require aircraft electrical power without assistance from the main engine 102. At a first step 510, the main engine 102 is running and the APU 53 is shutdown, such that the main engine 102 is connected to the aircraft electrical buses 114 - 126, and is supplying all of the required electrical power in the first operating mode. At a second step 520, the overall fuel flow of the first and second operating methods is determined using one of the methods described in figures 3 and 4. If the second operating mode is found to require a lower overall fuel flow than the first operating method, the method continues to a third step 530. In the third step 530, the capability of the APU 53 to provide the required electrical power in the current operating environment is assessed. This may be performed in a similar manner to step 210 of figure 3.

In a fourth step 540, where the capability of the APU 53 is found to be greater than the required electrical power, then an NBPT is carried out in the same manner as that described in figure 5. However, where the where the capability of the APU 53 is found to be less than the required electrical power, a fifth step 550 is carried out.

In the fifth step 550, the frequency of the AC current generated by the APU generator 53 is matched to the AC current generated by the main generators 104 - 110. This may be done by any suitable method, such as controlling the mechanical speed of one or more generators 104 - 112, or modulating the frequency of the main generators 104 - 11 and the APU generator 112 using power electronic convertors. Once the frequency is matched, the APU generator contactor is closed in a sixth step 560, such that both the APU generator 112 and the main engine generators 104 - 110 remain connected to the aircraft electrical buses.

The overall fuel flow of the first and second operating methods is then continually assessed in a seventh step 570 in a manner similar to the second step 520. If the first operating method is found to require a lower overall fuel flow than the second operating method, the method continues to an eighth step 580. In the eighth step, the amount of time the APU 53 has been running is assessed. The method is then paused until the APU 53 has been found to have been running for greater than a predetermined period. The method then switches the power generation system to the first operating method in a ninth step 590, using an NBPT.

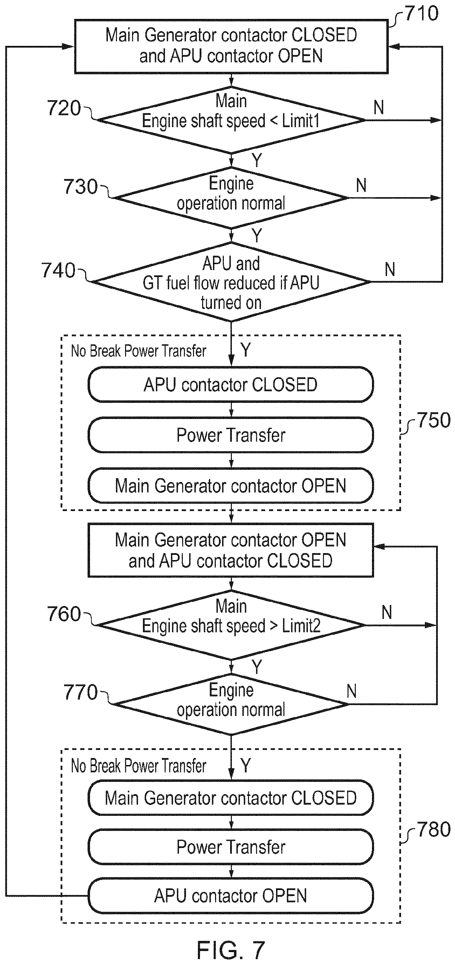

Instead of, or in addition to matching the power provided by the main engine 102 and APU 53 to the optimum overall fuel flow of the aircraft, the method may comprise matching power provided by the main engine 102 and APU 53 to a predetermined TET to improve main engine 102 life, or a predetermined noise level to increase operational flexibility. A system in which the power provided by the main engine 102 and APU 53 is matched to each of overall fuel flow, TET and noise level is shown in figure 7.

At a first step 710, the power generation system 100 is operated according to the first operating method, with only the main engine 102 running. The main generator contact is open and the APU generator contact is closed, such that the electrical power to the aircraft is supplied from the main engine 102.

At a second step 720, a flight cycle mode of the aircraft is determined by assessing a shaft speed of the main engine 102. In one example, the low pressure shaft 38 is monitored, and the flight cycle determined by the value of the corrected low pressure shaft speed. The corrected low pressure shaft speed is suitable, since this value is often measured by the engine EEC for other purposes, and has been found to give an accurate indication of the current flight mode. If the shaft speed is determined to be less than a first predetermined value, for example less than 20 to 30% of the maximum shaft speed, for a predetermined time, such as approximately 10 minutes, then the aircraft will be determined to be in a descent or landing mode. If the aircraft is determined to be in the descent or landing mode, the method will continue to a third step 730. If the aircraft is in any other mode, the method will continue to monitor the aircraft shaft speed to determine which mode the aircraft is in. In some cases, where the shaft speed is determined to be more than a second predetermined value for a predetermined time, such as approximately 10 minutes then the aircraft will be determined to be in a takeoff or ascent mode. If the aircraft is determined to be in the takeoff or ascent mode, the method will continue to the third step 730.

At the third step 730, an override condition is determined. The override condition could be determined by monitoring main engine 102 inlet icing conditions. This step is performed since the fuel flow benefit predicted by the method shown in figures 3 or 4 may not be met where the main engine 102 is not performing as predicted by the model, e.g. where the engine is subject to icing. If no override condition is found (for example if the inlet icing conditions are below a predetermined amount), then the method will continue to a fourth step 740. However, if the override condition is found, then the method will return to step 720 to monitor the aircraft shaft speed.

At the fourth step 740, the fuel flow of the first and second operating modes is determined by either of the methods shown in figures 3 and 4. If the second operating mode is found to be more efficient, the system 100 is switched to the second operating mode in a fifth step 750 using the NBPT method shown in Figure 5.

In a sixth step 760, the engine shaft speed is monitored to determine whether the aircraft is no longer in one of the takeoff, ascent, descent and landing modes. If the engine shaft speed is found to be above a third predetermined value, which lies above the first predetermined value then the aircraft is determined to no longer be in the descent mode or landing modes. The method then proceeds to a seventh step 770, in which the override condition is determined again. If no override condition is found, then the system 100 is switched back to the first operating method using the NBPT method.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

For example, the APU could comprise any suitable power source. The aircraft could comprise any suitable number of main engines and APUs A different electrical architecture than that shown in Figure 2 could be used. The generators could be powered by different shafts of the respective gas turbines. The gas turbines could comprise other types of gas turbines, such as turboprops, turbojets or open rotor gas turbine engines. The power transfer could be carried out using different methods. The electrical buses could comprise one or more DC electrical buses instead of or in addition to the AC electrical buses. One or more continuously variable transmissions (CVT) could be used to provide frequency synchronisation between the main and APU electrical generators. In a further alternative, a Doubly Fed Induction Generator (DFIG) could be used to provide frequency synchronisation between the main and APU electrical generators.

## Claims

1. A method of operating an electrical generation system (100) on an aircraft (900), the electrical generation system comprising a main ducted fan gas turbine engine (10) configured to drive a first electric generator (104, 106, 108, 110) as a first electrical power source (104, 106, 108, 110), and an auxiliary gas turbine engine (53) configured to drive a second electric generator (112) as a second electrical power source (112), the method comprising:
assessing a required electrical power of the aircraft (900);
assessing whether the first (104, 106, 108, 110) and the second (53) electrical power source are able to provide the required electrical power in combination;
assessing main ducted fan engine (10) operating parameters required to provide the required electrical power in a first operating mode comprising utilising only the first electrical power source (104, 106, 108, 110);
assessing main ducted fan engine (10) operating parameters required to provide the required electrical power in a second operating mode comprising utilising the first (104, 106, 108, 110) and second (112) electrical power source in combination; determining a fuel flow of the main ducted fan gas turbine engine (10) when operated at the determined operating parameters for the first operating mode; determining a fuel flow of the main ducted fan gas turbine engine (10) and auxiliary gas turbine engine (53) in combination when operated in the second operating mode;
determining the operating mode of the first (104, 106, 108, 110) and second (112) electrical power sources operating modes having the lowest fuel flow; and operating the first (104, 106, 108, 110) and second (112) electrical power sources according to the determined operating mode.

2. A method according to claim 1, wherein the method further comprises detecting a flight cycle mode, operating the electrical generation system (100) according to a predetermined operating mode on the basis of the detected flight cycle mode.

3. A method according to any of the preceding claims, wherein the step of determining the operating mode comprises determining the main engine (10) operating parameters required to provide the required electrical power using the main engine (10) and the auxiliary engine (53), and determining the thermal efficiency of the main engine (10) at the determined engine operating parameters.

4. A method according to claim 5, wherein the overall fuel flow of the first operating mode is determined by determining the first power source (104, 106, 108, 110) operating parameters required to provide the required electrical power using only the first power source (104, 106, 108, 110), and determining the thermal efficiency of the first power source (104, 106, 108, 110) at the determined operating parameters.

5. A method according to claim 6, wherein the engine operating parameters comprises any of throttle setting, one or more shaft rotational speeds, turbine entry temperature, turbine gas temperature overall pressure ratio, compressor entry pressure or compressor exit pressure and the enthalpy of one or more turbine exit flows.

6. A method according to any of claims 5 to 7 , wherein the fuel flow of the second operating mode is determined by determining the second power source (112) operating parameters required to generate the electrical power requirement, and determining the fuel flow of the second power source (112) at the second power source operating parameters.

7. A method according to any of the preceding claims, wherein the predetermined electrical generation system condition at the first or second power source operating parameters is determined using a lookup table or a model.

8. An aircraft (900) comprising an electrical power generation system (100), the power generation system comprising a main ducted fan gas turbine engine (10) configured to drive a first electric generator (104, 106, 108, 110) as a first electrical power power source (104, 106, 108, 110) and an auxiliary gas turbine engine (53) configured to drive a second electric generator (112) as a second electrical power source (112) and a controller configured to:
assess a required electrical power of the aircraft (900);
assess whether the first (104, 106, 108, 110) and second (112) electrical power source are able to provide the require electrical power in combination;
assess main ducted fan engine (10) operating parameters required to provide the required electrical power in a first operating mode comprising utilising only the first electrical power source (104, 106, 108, 110);
assess main ducted fan engine (10) operating parameters required to provide the required electrical power in a second operating mode comprising utilising the first (104, 106, 108, 110) and second (112) electrical power source in combination; determine a fuel flow of the main ducted fan gas turbine engine (10) when operated at the determined operating parameters for the first operating mode; determine a fuel flow of the main ducted fan gas turbine engine (10) and auxiliary gas turbine engine (53) in combination when operated in the second operating mode;
determine the operating mode of the first (104, 106, 108, 110) and second electrical power sources (112) operating modes having the lowest fuel flow; and
operate the first (104, 106, 108, 110) and second (112) electrical power sources according to the determined operating mode.

## Patentansprüche

1. Verfahren für den Betrieb eines Stromerzeugungssystems (100) an einem Luftfahrzeug (900), wobei das Stromerzeugungssystem einen Haupt-Mantelpropeller-Gasturbinenmotor (10) umfasst, der so gestaltet ist, dass er einen ersten elektrischen Generator (104, 106, 108, 110) als erste Stromquelle (104, 106, 108, 110) antreibt sowie einen Zusatz-Gasturbinenmotor (53), der so gestaltet ist, dass er einen zweiten elektrischen Generator (112) als eine zweite Stromquelle (112) antreibt, wobei das Verfahren folgendes umfasst:
Feststellen einer erforderlichen elektrischen Leistung des Luftfahrzeugs (900);
Bestimmen, ob die erste (104, 106, 108, 110) und die zweite (53) Stromquelle in der Lage sind, kombiniert die erforderliche elektrische Leistung bereitzustellen;
Feststellen der erforderlichen Betriebsparameter des Haupt-Mantelpropellermotors (10), um die erforderliche elektrische Leistung in einem ersten Betriebsmodus unter Verwendung ausschließlich der ersten Stromquelle (104, 106, 108, 110) bereitzustellen;
Feststellen der erforderlichen Betriebsparameter des Haupt-Mantelpropellermotors (10), um die erforderliche elektrische Leistung in einem zweiten Betriebsmodus unter Verwendung der ersten (104, 106, 108, 110) und zweiten (112) Stromquelle in Kombination bereitzustellen;
Bestimmen eines Kraftstoffflusses des Haupt-Mantelpropeller-Gasturbinenmotor (10) bei einem Betrieb mit den bestimmten Betriebsparametern für den ersten Betriebsmodus;
Bestimmen eines Kraftstoffflusses des Haupt-Mantelpropeller-Gasturbinenmotor (10) und des Zusatz-Gasturbinenmotor (53) in Kombination bei einem Betrieb in dem zweiten Betriebsmodus;
Bestimmen des Betriebsmodus der Betriebsmodi der ersten (104, 106, 108, 110) und der zweiten (112) Stromquellen mit dem geringen Kraftstofffluss; und
Betreiben der ersten (104, 106, 108, 110) und der zweiten (112) Stromquellen gemäß dem bestimmten Betriebsmodus.

2. Verfahren nach Anspruch 1, wobei das Verfahren ferner das Erkennen eines Flugzyklusmodus umfasst, wobei das Stromerzeugungssystem (100) gemäß einem vorbestimmten Betriebsmodus auf der Basis des erkannten Flugzyklusmodus betrieben wird.

3. Verfahren nach einem der vorstehenden Ansprüche, wobei der Schritt des Bestimmens des Betriebsmodus das Bestimmen der erforderlichen Betriebsparameter des Hauptmotors (10) umfasst, um die erforderliche elektrische Leistung unter Verwendung des Hauptmotors (10) und des Zusatzmotors (53) bereitzustellen, sowie das Bestimmen der thermischen Wirkungsgrads des Hauptmotors (10) bei den bestimmten Motorbetriebsparametern.

4. Verfahren nach Anspruch 5, wobei der Kraftstofffluss insgesamt des ersten Betriebsmodus bestimmt wird durch Bestimmen der erforderlichen Betriebsparameter der ersten Stromquelle (104, 106, 108, 110), um die erforderliche elektrische Leistung bereitzustellen, unter ausschließlicher Verwendung der ersten Stromquelle (104, 106, 108, 110), und Bestimmen des thermischen Wirkungsgrads der ersten Stromquelle (104, 106, 108, 110) bei den bestimmten Betriebsparametern.

5. Verfahren nach Anspruch 6, wobei die Motorbetriebsparameter beliebige der folgenden umfassen: Drosseleinstellung, eine oder mehrere Wellendrehzahlen, Turbineneintrittstemperatur, Gesamtverhältnis von Turbinengastemperatur zu Druck, Kompressoreintrittsdruck oder Kompressoraustrittsdruck und Enthalpie eines oder mehrerer Turbinenaustrittsströmungen.

6. Verfahren nach einem der Ansprüche 5 bis 7, wobei der Kraftstofffluss des zweiten Betriebsmodus bestimmt wird durch Bestimmen der erforderlichen Betriebsparameter der zweiten Stromquelle (112), um die erforderliche elektrische Leistung zu erzeugen, und Bestimmen des Kraftstoffflusses der zweiten Stromquelle (112) bei den Betriebsparametern der zweiten Stromquelle.

7. Verfahren nach einem der vorstehenden Ansprüche, wobei der vorbestimmte Zustand des Stromerzeugungssystems bei den Betriebsparametern der ersten oder zweiten Stromquelle bestimmt wird unter Verwendung einer Verweistabelle oder eines Modells.

8. Luftfahrzeug (900), das ein Stromerzeugungssystem (100) umfasst, wobei das Stromerzeugungssystem einen Haupt-Mantelpropeller-Gasturbinenmotor (10) umfasst, der so gestaltet ist, dass er einen ersten elektrischen Generator (104, 106, 108, 110) als erste Stromquelle (104, 106, 108, 110) antreibt sowie einen Zusatz-Gasturbinenmotor (53), der so gestaltet ist, dass er einen zweiten elektrischen Generator (112) als eine zweite Stromquelle (112) antreibt, und eine Steuereinheit, die zu folgenden Zwecken gestaltet ist:
Feststellen einer erforderlichen elektrischen Leistung des Luftfahrzeugs (900);
Bestimmen, ob die erste (104, 106, 108, 110) und die zweite (112) Stromquelle in der Lage sind, kombiniert die erforderliche elektrische Leistung bereitzustellen;
Feststellen der erforderlichen Betriebsparameter des Haupt-Mantelpropellermotors (10), um die erforderliche elektrische Leistung in einem ersten Betriebsmodus unter Verwendung ausschließlich der ersten Stromquelle (104, 106, 108, 110) bereitzustellen;
Feststellen der erforderlichen Betriebsparameter des Haupt-Mantelpropellermotors (10), um die erforderliche elektrische Leistung in einem zweiten Betriebsmodus unter Verwendung der ersten (104, 106, 108, 110) und zweiten (112) Stromquelle in Kombination bereitzustellen;
Bestimmen eines Kraftstoffflusses des Haupt-Mantelpropeller-Gasturbinenmotor (10) bei einem Betrieb mit den bestimmten Betriebsparametern für den ersten Betriebsmodus;
Bestimmen eines Kraftstoffflusses des Haupt-Mantelpropeller-Gasturbinenmotor (10) und des Zusatz-Gasturbinenmotor (53) in Kombination bei einem Betrieb in dem zweiten Betriebsmodus;
Bestimmen des Betriebsmodus der Betriebsmodi der ersten (104, 106, 108, 110) und der zweiten (112) Stromquellen mit dem geringen Kraftstofffluss; und
Betreiben der ersten (104, 106, 108, 110) und der zweiten (112) Stromquellen gemäß dem bestimmten Betriebsmodus.

## Revendications

1. Procédé de fonctionnement d'un système de génération électrique (100) sur un aéronef (900), le système de génération électrique comprenant un moteur à turbine à gaz à soufflante canalisée principal (10) conçu pour entraîner un premier générateur électrique (104, 106, 108, 110) comme première source d'alimentation électrique (104, 106, 108, 110), et un moteur à turbine à gaz auxiliaire (53) conçu pour entraîner un second générateur électrique (112) comme seconde source d'alimentation électrique (112), le procédé comprenant les procédés consistant à :
évaluer l'alimentation électrique nécessaire de l'aéronef (900) ;
évaluer si la première (104, 106, 108, 110) et la seconde (53) source d'alimentation électrique peuvent fournir l'alimentation électrique requise en combinaison ;
évaluer les paramètres de fonctionnement du moteur à soufflante canalisée principal (10) requis pour fournir l'alimentation électrique requise dans un premier mode de fonctionnement comprenant l'utilisation seulement de la première source d'alimentation électrique (104, 106, 108, 110) ;
évaluer les paramètres de fonctionnement du moteur à soufflante canalisée principal (10) requis pour fournir l'alimentation électrique requise dans un second mode de fonctionnement comprenant l'utilisation de la première (104, 106, 108, 110) et de la seconde (112) source d'alimentation électrique en combinaison ;
déterminer un flux de carburant du moteur à turbine à gaz à soufflante canalisée principal (10) lorsqu'il fonctionne selon les paramètres de fonctionnement déterminés pour le premier mode de fonctionnement ;
déterminer un flux de carburant du moteur à turbine à gaz à soufflante canalisée principal (10) et du moteur à turbine à gaz auxiliaire (53) en combinaison lorsqu'ils fonctionnent dans le second mode de fonctionnement ;
déterminer le mode de fonctionnement des modes de fonctionnement des première (104, 106, 108, 110) et seconde (112) sources d'alimentation électrique ayant le plus faible flux de carburant ; et
utiliser les première (104, 106, 108, 110) et seconde (112) sources d'alimentation électrique selon le mode de fonctionnement déterminé.

2. Procédé selon la revendication 1, le procédé comprenant en outre les étapes consistant à détecter un mode de cycle de vol, utiliser le système de génération électrique (100) selon un mode de fonctionnement prédéfini sur la base du mode de cycle de vol détecté.

3. Procédé selon l'une quelconque des revendications précédentes, la détermination du mode de fonctionnement comprenant les étapes consistant à déterminer les paramètres de fonctionnement du moteur principal (10) nécessaires pour fournir l'alimentation électrique requise en utilisant le moteur principal (10) et le moteur auxiliaire (53), et déterminer le rendement thermique du moteur principal (10) aux paramètres de fonctionnement du moteur déterminés.

4. Procédé selon la revendication 5, le flux global de carburant du premier mode de fonctionnement étant déterminé en déterminant les paramètres de fonctionnement de la première source d'alimentation (104, 106, 108, 110) requis pour fournir l'alimentation électrique requise en utilisant uniquement la première source d'alimentation (104, 106, 108, 110), et en déterminant l'efficacité thermique de la première source d'alimentation (104, 106, 108, 110) avec les paramètres de fonctionnement déterminés.

5. Procédé selon la revendication 6, les paramètres de fonctionnement du moteur comprenant l'un quelconque des paramètres suivants : réglage du papillon des gaz, une ou plusieurs vitesses de rotation de l'arbre, température d'entrée de la turbine, rapport de pression totale de la température du gaz de la turbine, pression d'entrée du compresseur ou pression de sortie du compresseur et enthalpie d'un ou plusieurs flux de sortie de turbine.

6. Procédé selon l'une quelconque des revendications 5 à 7, le flux de carburant du second mode de fonctionnement étant déterminé en déterminant les paramètres de fonctionnement de la seconde source d'alimentation (112) requis pour générer l'alimentation électrique requise, et en déterminant le flux de carburant de la seconde source d'alimentation (112) aux paramètres de fonctionnement de la seconde source d'alimentation.

7. Procédé selon l'une quelconque des revendications précédentes, l'état prédéfini du système de génération d'électricité aux paramètres de fonctionnement des première ou seconde source d'alimentation étant déterminé en utilisant une table de consultation ou un modèle.

8. Aéronef (900) comprenant un système de génération d'alimentation électrique (100), le système de génération électrique comprenant un moteur à turbine à gaz à soufflante canalisée principal (10) conçu pour entraîner un premier générateur électrique (104, 106, 108, 110) comme première source d'alimentation électrique (104, 106, 108, 110), et un moteur à turbine à gaz auxiliaire (53) conçu pour entraîner un second générateur électrique (112) comme seconde source d'alimentation électrique (112) et un dispositif de commande conçu sur :
évaluer l'alimentation électrique requise de l'aéronef (900) ;
évaluer si la première (104, 106, 108, 110) et la seconde (112) source d'alimentation électrique peuvent fournir l'alimentation électrique requise en combinaison ;
évaluer les paramètres de fonctionnement du moteur à soufflante canalisée principal (10) requis pour fournir l'alimentation électrique requise dans un premier mode de fonctionnement comprenant l'utilisation seulement de la première source d'alimentation électrique (104, 106, 108, 110) ;
évaluer les paramètres de fonctionnement du moteur à soufflante canalisée principal (10) requis pour fournir l'alimentation électrique requise dans un second mode de fonctionnement comprenant l'utilisation de la première (104, 106, 108, 110) et de la seconde (112) source d'alimentation électrique en combinaison ;
déterminer un flux de carburant du moteur à turbine à gaz à soufflante canalisée principal (10) lorsqu'il fonctionne selon les paramètres de fonctionnement déterminés pour le premier mode de fonctionnement ;
déterminer un flux de carburant du moteur à turbine à gaz à soufflante canalisée principal (10) et du moteur à turbine à gaz auxiliaire (53) en combinaison lorsqu'ils fonctionnent dans le second mode de fonctionnement ;
déterminer le mode de fonctionnement des modes de fonctionnements des première (104, 106, 108, 110) et seconde (112) sources d'alimentation électrique ayant le plus faible flux de carburant ; et
utiliser les première (104, 106, 108, 110) et seconde (112) sources d'alimentation électrique selon le mode de fonctionnement déterminé.
